# EUROPEAN PATENT SPECIFICATION

(11) **EP 2 250 206 B1**
(45) Date of publication and mention of the grant of the patent: **31.10.2012**
(21) Application number: 08869686.9
(22) Date of filing: 31.12.2008
(51) Int. Cl.: C08G 18/36, B60R 13/02, B29L 31/30

(54) **TRIM COMPONENT WITH INCREASED RENEWABLE MATERIALS**
VERKLEIDUNGSTEIL MIT ERHÖHTEM GEHALT AN NACHWACHSENDEN ROHSTOFFEN
COMPOSANT DE GARNITURE AVEC MATÉRIAUX RENOUVELABLES ACCRUS

(30) Priority: 04.01.2008 US 6294
(43) Date of publication of application: 17.11.2010
(73) Proprietor: Johnson Controls Technology Company, Holland, MI 49423 (US)
(72) Inventor: JOHNSON, Jack, L., Holland MI 49423 (US); BOOM, Laura, N., Holland MI 49423 (US); GREGORY, Kevin, Holland MI 49423 (US)
(74) Representative: Wolff, Felix
(86) International application number: PCT/US2008/088621
(87) International publication number: WO 2009/088917

(56) References cited:
- WO-A-01/10637
- WO-A-98/06600
- DE-A1- 4 018 116
- US-A- 4 546 120
- US-A1- 2006 223 723
- US-B2- 6 649 667

## Description

### CROSS-REFERENCE TO RELATED PATENT APPLICATIONS

### BACKGROUND

The present disclosure relates to a trim component for a vehicle (e.g., a headliner, a door panel, a sidewall panel, a cockpit component, etc.). More specifically, the present disclosure relates to a trim component that is at least partially formed of renewable (e.g., natural, green, agricultural-based, etc.) materials and a method of forming such a trim component.

A vehicle trim component, such as a headliner panel for the interior of the vehicle, is often formed of a foam layer that is coupled to a structural layer. For such a vehicle trim component, the foam layer may be formed of a petroleum-derived polyurethane-based material, while the structural layer may be formed with reinforcing glass fibers. The foam layer is often coupled to the structural layer using a petroleum-based adhesive.

Recently, there has been an increased interest in environmental awareness and the use of natural materials with greater sustainability. However, the problems posed by forming a vehicle trim component with natural materials is particularly complicated because of the increased physical properties required in the automotive and/or aerospace industries. As such the selection of a solution is likely to be unforeseeable to due complications including, but not limited to, manufacturing cost increases, manufacturing efficiency losses, product performance losses, etc. encountered when attempting to incorporate natural materials into a vehicle trim component.
WO 01/10637 A1 discloser a trim panel according to the preamble of claim 1.

### SUMMARY

One embodiment relates to a trim panel for a vehicle. The trim panel includes a compressible layer that is at least partially formed of an agricultural oil-based polyol and a first structural layer that is coupled to the compressible layer. The structural layer has reinforcing fibers formed of an agricultural material. The trim panel also includes an adhesive layer provided between the compressible layer and the first structural layer. The adhesive layer is at least partially formed of an agricultural material.

Another embodiment relates to a method of manufacturing a trim panel for a vehicle. The method includes providing a compressible layer and a structural layer. The compressible layer is formed of an agricultural oil-based polyol. The structural layer has reinforcing fibers formed of an agricultural material. The method also includes coupling the compressible layer to the structural layer with an adhesive layer. The adhesive layer includes an agricultural-based dilutant.

### BRIEF DESCRIPTION OF THE DRAWINGS

FIGURE 1 is an isometric view of the interior of a vehicle including a headliner panel according to an exemplary embodiment.

FIGURE 2 is a cross section of a headliner panel including renewable materials according to an exemplary embodiment.

FIGURE 3 is a block diagram of a method of forming a foam material according to an exemplary embodiment.

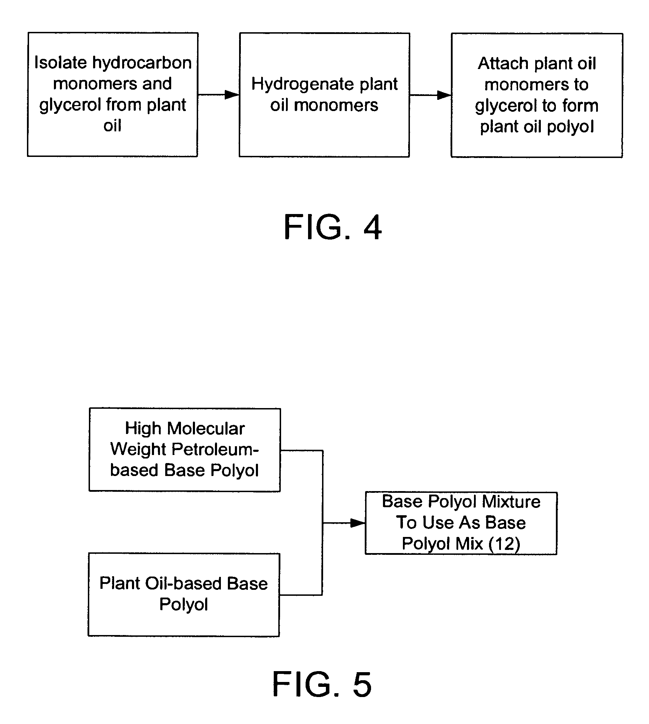

FIGURE 4 is a block diagram of a method of manufacturing natural oil polyols.

FIGURE 5 is a block diagram of a method of forming a foam material from both a plant-based material and a petroleum based material according to an exemplary embodiment.

### DETAILED DESCRIPTION

Referring to the FIGURES in general, a trim component and components thereof are shown according to various exemplary embodiments. The trim component replaces, partially or completely, materials that are traditionally derived from petrochemicals with materials formed of natural and/or renewable resources such as agricultural materials (e.g., bio-based, materials derived from plants, etc.) while still meeting current and increasing performance specifications and requirements for vehicular applications.

The trim component generally comprises a first layer (e.g., a compressible layer, etc.), a second layer (e.g., a structural layer, etc.) and a third layer (e.g., an adhesive layer, etc.) used to couple the first layer to the second layer. For purposes of this disclosure, the term "coupled" means the joining of two members directly or indirectly to one another. Such joining may be stationary in nature or moveable in nature and/or such joining may allow for the flow of fluids, electricity, electrical signals, or other types of signals or communication between the two members. Such joining may be achieved with the two members or the two members and any additional intermediate members being integrally formed as a single unitary body with one another or with the two members or the two members and any additional intermediate members being attached to one another. Such joining may be permanent in nature or alternatively may be removable or releasable in nature.

Each of the first layer, the second layer and the third layer is made at least partially from materials derived from agricultural, natural and/or renewable resources. For example, the first layer is at least partially formed of an agricultural oil-based polyol, the second layer includes reinforcing fibers formed of an agricultural material and the third layer includes an agricultural-based dilutant. While the trim component is illustrated and described herein as a headliner panel for an automobile, it should be noted that the trim component could be any of a variety of trim components used within a vehicle including, but not limited to, door panels, sidewall panels, floor panels, visors, package trays, etc.

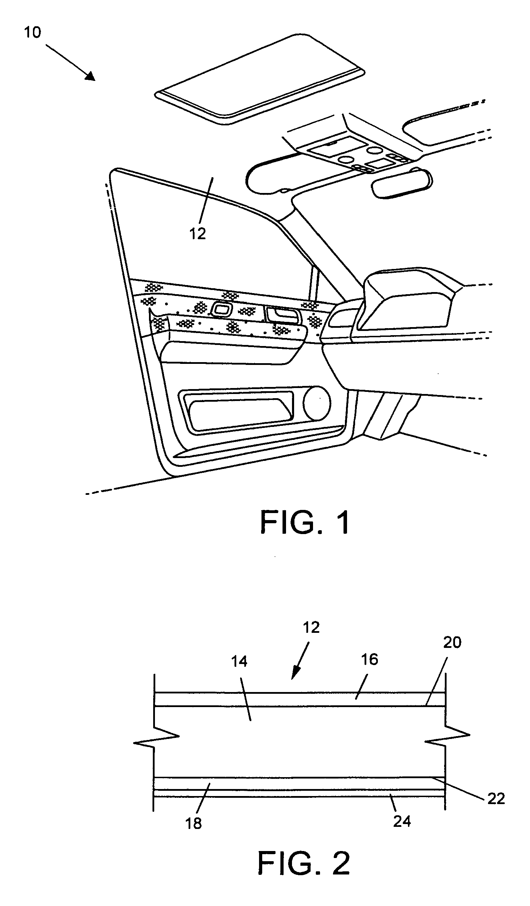

Referring to FIGURE 1, the interior of a vehicle 10 is shown according to an exemplary embodiment. Vehicle 10 includes a headliner panel 12 coupled to a roof of the vehicle. As shown in FIGURE 1, headliner panel 12 may include one or more openings for features such as sunroofs, grab handles, visors, etc. Headliner panel 12 replaces, partially or completely, materials that are traditionally derived from petrochemicals with materials formed of natural and/or renewable resources such as agricultural materials (e.g., materials derived from plants, etc.) while still meeting current and increasing performance specifications and requirements for headliner panels.

FIGURE 2 is a cross section of headliner panel 12 shown according to an exemplary embodiment. According to the embodiment illustrated, headliner panel 12 includes a compressible layer 14 (e.g., a foam layer, etc.), a first structural layer 16 coupled to a first surface (e.g., upper surface, etc.) of compressible layer 14, a second structural layer 18 coupled to a second surface (e.g., lower surface, etc.) of compressible layer 14, a first adhesive layer 20 for coupling first structural layer 16 to compressible layer 14 and a second adhesive layer 22 for coupling second structural layer 18 to compressible layer 14. Headliner panel 12 may also include a cover layer 24 (e.g., outer layer, trim layer, decorative layer, etc.) that at least partially covers second structural layer 18. Cover layer 24 can be, for example, a textile (e.g., a woven fabric, a non-woven, a knit fabric, etc.), leather, a polymer material (e.g., vinyl, thermoplastic polyurethane (TPU), thermoplastic olefin (TPO), polyvinyl chloride (PVC), etc.), or any other suitable cover material.

According to an exemplary embodiment, headliner panel 12 includes a compressible layer 14 in the form of a foam material that is at least partially formed of an agricultural oil-based polyol, a structural layer 14, 16 in the form of a composite sheet material that includes reinforcing fibers that are formed of agricultural-based fibers or a combination of agricultural-based fibers and carrier fibers, and an adhesive layer 20, 22 that is at least partially formed of an agricultural-based dilutant. The combination of compressible layer 14, structural layer 14, 16 and adhesive layer 20, 22 provide a relatively light weight headliner composite.

### COMPRESSIBLE LAYER

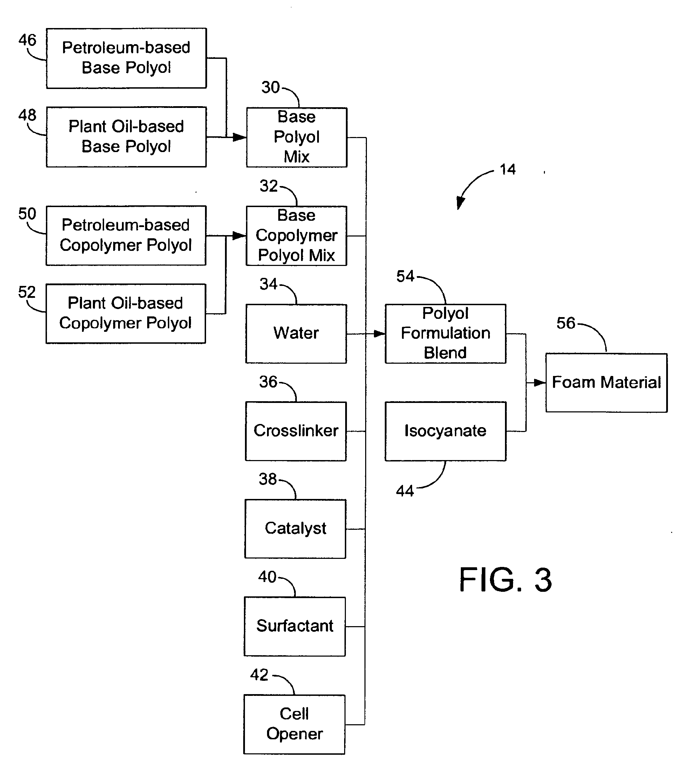

Referring to FIGURE 3, the composition of compressible layer 14 is shown according to an exemplary embodiment. As illustrated, at least a portion of the components for the foam making process are derived from a more readily renewable (e.g., "green"), natural source such as from a plant source (e.g., corn, soy, other vegetables or plants, etc.). Compressible layer 12 is formed via a process that includes the reaction of a base polyol resin blended material or mix 30, a copolymer polyol resin blended material or mix 32, water 34, a crosslinker material 36, a catalyst material 38, a surfactant material 40, a cell opener (or regulator) 42 and an isocyanate material 44. According to an exemplary embodiment, base polyol mix 30 and base copolymer polyol mix 32 are each formed of both a non-agricultural based polyol and an agricultural based polyol. For example, base polyol mix 30 is shown as being formed of a petroleum-based base polyol 46 and a plant oil-based base polyol 48. Similarly, base copolymer polyol mix 32 is shown as being formed of a petroleum-based copolymer polyol 50 and a plant oil-based base polyol 52. According to an exemplary embodiment, base polyol mix 30, copolymer polyol mix 32, water 34, crosslinker 36, catalyst 3 8, surfactant 40 and cell opener 42 are blended to make a polyol formulation blend 54. Isocyanate 44 and polyol formulation blend 54 are mixed to form a foam material 56.

The use of agricultural or natural materials such as natural oil-based polyols is desirable to increase the amount of "green" or readily renewable materials used to manufacture polyurethane-based foam. Natural oil-based polyols have a relatively low reactivity and their molecular weight has limited their use to percentages to approximately 5 percent to approximately 7 percent of the foam by weight. The foams for structural interior components are generally semi-rigid and do not require high molecular weights. The lower molecular weights of natural oil-based polyols advantageously allow a significant increase in natural oil-based polyols, which can be as high as approximately 50 percent.

According to an exemplary embodiment, compressible layer 14 may be formed of a foam material that is commercially available from The Woodbridge Group, and sold under the name Stratas 1615 with Biopolyl.

### STRUCTURAL LAYER(S)

Structural layers of trim components are often formed of a fiberglass sheet material. According to an exemplary embodiment, to increase the amount of renewable material, one or more of structural layers 16, 18 of headliner panel 12 replace the glass fibers with an agricultural fiber mat or a mat comprised of fiber synthetic blends such as polypropylene (PP) fibers and a carrier fiber such as polyethylene terephthalate (PET) or PP. The agricultural fibers are in low percentages, but advantageously can serve as a carrier fiber. The petroleum fibers can be in concentration of, for example, approximately 30 percent to approximately 50 percent (e.g., a fiber mat formed with 50 percent natural fibers and 50 percent polymer fibers, etc.).

According to an exemplary embodiment, the agricultural fibers are formed of hemp, flax, jute, knaf or any other known or otherwise suitable agricultural or natural material. For example, the reinforcing fiber mat of structural layer 16 and/or 18 may be formed of 100 percent jute, 100 percent hemp, 100 percent flax or any combination thereof (e.g., 70/30 flax to hemp, 50/50 flax to hemp, 30/70 flax to hemp, 70/30 jute to hemp, 50/50 jute to hemp, 30/70 jute to hemp etc.).

As can be appreciated, the properties of an agricultural fiber mat may vary in relation to the properties of a glass fiber mat. For example, a glass fiber mat may have a tensile strength of approximately 2400 Newton per square millimeter (N/square mm). In comparison, flax may have a tensile strength of between approximately 800 and approximately 1500 N/square mm, jute may have a tensile strength of between approximately 400 and approximately 600 N/square mm, and hemp may have a tensile strength of between approximately 800 and approximately 1500 N/square mm. As such, between two and four times the volume of the agricultural fiber would be needed to achieve an equivalent strength to a comparable glass fiber mat. Once this ratio is determined, the equivalent fiber weight and the equivalent volume of the adhesive needed to bond the fiber mat can be calculated. According to an exemplary embodiment, structural layers 16 and 18 are each configured to be approximately 2.4 square meters in area and include a ratio of fibers to adhesive by volume of 48.48 to 51.52.

According to an exemplary embodiment, one or more of structural layers 16, 18 may be formed of a natural fiber mat that is commercially available from Flexform in Indiana, and sold under the name 150 gsm Tossa.

### ADHESIVE LAYER(S)

According to an exemplary embodiment, compressible layer 14 is formed into a substantially flat sheet using a known or otherwise suitable process (e.g., as pours or continuous pour). The flat foam sheet is then coupled to one or more of structural layers 16, 18 that add strength and stiffness to headliner panel 12. To facilitate the coupling of compressible layer 14 to one or more of structural layers 16, 18, compressible layer 14 is coated (e.g., with a roll coat operation or spray) with one or more of adhesive layers 20, 22. The bond provided by adhesive layers 20, 22 creates a matrix for structural layers 16, 18 and bonds structural layers 16, 18 to compressible layer 14. According to an exemplary embodiment, adhesive layers 20, 22 are formed of a poly(diphenylmethane diisocyanate)-based (MDI-based) adhesive. To increase the agricultural or natural (e.g., biobased, etc.) content used in headliner panel 12, the MDI adhesive matrix is diluted with inert agricultural-based oils (e.g., vegetable oils, etc.). According to one exemplary embodiment, a dilutant is formed using soy-based materials. Soy-based dilutants can be relatively less expensive than traditional dilutants such as dipropylene glycol. Soy oil monomers and glycerin are isolated using existing methods. The lower molecular weight material is made into isomers, hydrogenated, and EO-capped with ethylene oxide to make the molecule more reactive. The soy-based diol is used as a dilutant for the MDI-based adhesive. The chain length of the monomers may be adjusted as needed to increase solubility.

According to an exemplary embodiment, adhesive layers 20, 22 may be an MDI-based adhesive that is commercially available from Bayer, and sold under the name Baynat 401a.

After structural layers 16, 18 are coupled to compressible layer 14, cover layer 24 (e.g., a coverstock, etc.) can be coupled to one side of headliner panel 12. A close out scrim can be coupled to an opposite side of headliner panel 12 and headliner panel 12 may be formed (e.g., by heat forming) to create a finished headliner trim panel.

Using agricultural or natural fibers, vegetable oil-based foam, and adhesive diluted with vegetable-based products is intended to produce a light-weight headliner including a high percentage of renewable or "green" materials by using such renewable materials in the manufacturing of each of the thee main components.

## Claims

1. A trim panel (12) for a vehicle, the trim panel comprising:
a compressible layer (14) being at least partially formed of an agricultural oil-based polyols,
a first structural layer (16) coupled to a first side of the compressible layer, the first structural layer having reinforcing fibers formed of an agricultural material; and
an adhesive layer (20) provided between the compressible layer (14) and the first structural layer (16), the adhesive layer being at least partially formed of an agricultural material,
charactered in that
the compressible layer (14) comprises a base polyol mix and a base copolymer mix, the base polyol mix and the base copolymer mix each comprising the agricultural oil-based polyol.

2. The trim panel of Claim 1 wherein the compressible layer is a foam material.

3. The trim panel of Claim 1 wherein the compressible layer is further formed of a polyurethane-based polyol.

4. The trim panel of Claim 3 wherein compressible layer is formed of approximately equal parts of the agricultural oil-based polyol and the polyurethane-based polyol.

5. The trim panel of Claim 1 wherein the base polyol mix further comprises a polyurethane-based polyol.

6. The trim panel of Claim 1 wherein the base copolymer mix further comprises a polyurethane-based polyol.

7. The trim panel of Claim 1 wherein the agricultural oil-based polyol comprises at least one of a soy oil-based polyol and a corn oil-based polyol.

8. The trim panel of Claim 1 further comprising a second structural layer coupled to a second side of the compressible layer, the second structural layer having reinforcing fibers formed of an agricultural material.

9. The trim panel of Claim 1 further comprising a cover material coupled to the first structural layer on a side opposite the compressible layer.

10. The trim panel of Claim 1 wherein the trim panel is a headliner for an interior of the vehicle.

11. The trim panel of Claim 1 wherein the reinforcing fiber is formed of at least one of a jute, hemp and flax.

12. The trim panel of Claim 12 wherein the reinforcing fiber is in the form of a fiber mal.

13. The trim panel of Claim 1 wherein the adhesive layer includes a plant oil-based dilutant.

14. A method of manufacturing a trim panel for a vehicle, the method comprising:
providing a compressible layer (14), the compressible layer being formed of an agricultural oil-based polyol;
providing a structural layer (16), the structural layer having reinforcing fibers formed of an agricultural material; and
coupling the compressible layer to the structural layer with an adhesive layer (20), the adhesive layer including an agricultural-based dilutant,
**characterized by**
providing the compressible layer (14) comprising a base polyol mix and a base copolymer mix, the base polyol mix and the base copolymer mix each comprising the agricultural oil-based polyol.

## Patentansprüche

1. Verkleidungsplatte (12) für ein Fahrzeug, wobei die Verkleidungsplatte Folgendes umfasst:
eine komprimierbare Schicht (14), die mindestens teilweise aus einem auf Landwirtschaftsöl basierenden Polyol gebildet ist,
eine erste strukturelle Schicht (16), die an eine erste Seite der komprimierbaren Schicht gekoppelt ist, wobei die erste strukturelle Schicht verstärkende Fasern aufweist, die aus einem landwirtschaftlichen Material gebildet sind; und
eine Klebstoffschicht (20), die zwischen der komprimierbaren Schicht (14) und der ersten strukturellen Schicht (16) bereitgestellt ist, wobei die Klebstoffschicht mindestens teilweise aus einem landwirtschaftlichen Material gebildet ist,
**dadurch gekennzeichnet, dass**
die komprimierbare Schicht (14) eine Grundpolyolmischung und eine Grundcopolymermischung umfasst, wobei die Grundpolyolmischung und die Grundcopolymermischung jeweils das auf Landwirtschaftsöl basierende Polyol umfassen.

2. Verkleidungsplatte nach Anspruch 1, wobei die komprimierbare Schicht ein Schaummaterial ist.

3. Verkleidungsplatte nach Anspruch 1, wobei die komprimierbare Schicht des Weiteren aus einem auf Polyurethan basierenden Polyol gebildet ist.

4. Verkleidungsplatte nach Anspruch 3, wobei die komprimierbare Schicht aus ungefähr gleichen Teilen des auf Landwirtschaftsöl basierenden Polyols und des auf Polyurethan basierenden Polyols gebildet ist.

5. Verkleidungsplatte nach Anspruch 1, wobei die Grundpolyolmischung des Weiteren ein auf Polyurethan basierendes Polyol umfasst.

6. Verkleidungsplatte nach Anspruch 1, wobei die Grundcopolymermischung des Weiteren ein auf Polyurethan basierendes Polyol umfasst.

7. Verkleidungsplatte nach Anspruch 1, wobei das auf Landwirtschaftsöl basierende Polyol ein auf Sojaöl basierendes Polyol und/oder ein auf Maisöl basierendes Polyol umfasst.

8. Verkleidungsplatte nach Anspruch 1, des Weiteren eine zweite strukturelle Schicht umfassend, die an eine zweite Seite der komprimierbaren Schicht gekoppelt ist, wobei die zweite strukturelle Schicht verstärkende Fasern aufweist, die aus einem landwirtschaftlichen Material gebildet sind.

9. Verkleidungsplatte nach Anspruch 1, des Weiteren ein Bedeckungsmaterial umfassend, das an die erste strukturelle Schicht auf einer der komprimierbaren Schicht gegenüberliegenden Seite gekoppelt ist.

10. Verkleidungsplatte nach Anspruch 1, wobei die Verkleidungsplatte eine Dachauskleidung für eine Innenseite des Fahrzeugs ist.

11. Verkleidungsplatte nach Anspruch 1, wobei die verstärkende Faser aus Jute, Hanf und/oder Flachs gebildet ist.

12. Verkleidungsplatte nach Anspruch 12, wobei die verstärkende Faser in Form einer Fasermatte vorliegt.

13. Verkleidungsplatte nach Anspruch 1, wobei die Klebstoffschicht ein auf Pflanzenöl basierendes Verdünnungsmittel umfasst.

14. Verfahren zur Herstellung einer Verkleidungsplatte für ein Fahrzeug, wobei das Verfahren Folgendes umfasst:
das Bereitstellen einer komprimierbaren Schicht (14), wobei die komprimierbare Schicht aus einem auf Landwirtschaftsöl basierenden Polyol gebildet ist,
das Bereitstellen einer strukturellen Schicht (16), wobei die strukturelle Schicht verstärkende Fasern aufweist, die aus einem landwirtschaftlichen Material gebildet sind; und
das Koppeln der komprimierbaren Schicht an die strukturelle Schicht mit einer Klebstoffschicht (20), wobei die Klebstoffschicht ein Verdünnungsmittel auf landwirtschaftlicher Basis umfasst,
**gekennzeichnet durch**
das Bereitstellen der komprimierbaren Schicht (14), die eine Grundpolyolmischung und eine Grundcopolymermischung umfasst, wobei die Grundpolyolmischung und die Grundcopolymermischung jeweils das auf Landwirtschaftsöl basierende Polyol umfassen.

## Revendications

1. Panneau de garniture (12) pour un véhicule, le panneau de garniture comprenant:
une couche compressible (14) qui est au moins partiellement constituée d'un polyol à base d'huile agricole;
une première couche structurelle (16) qui est couplée à un premier côté de la couche compressible, la première couche structurelle comprenant des fibres de renforcement qui sont constituées d'une matière agricole; et
une couche adhésive (20) qui est prévue entre la couche compressible (14) et la première couche structurelle (16), la couche adhésive étant au moins partiellement constituée d'une matière agricole,
**caractérisé en ce que**:
la couche compressible (14) comprend un mélange de polyol de base et un mélange de copolymère de base, le mélange de polyol de base et le mélange de copolymère de base comprenant chacun le polyol à base d'huile agricole.

2. Panneau de garniture selon la revendication 1, dans lequel la couche compressible est un matériau de mousse.

3. Panneau de garniture selon la revendication 1, dans lequel la couche compressible est en outre constituée d'un polyol à base de polyuréthane.

4. Panneau de garniture selon la revendication 3, dans lequel la couche compressible est constituée approximativement à parts égales du polyol à base d'huile agricole et du polyol à base de polyuréthane.

5. Panneau de garniture selon la revendication 1, dans lequel le mélange de polyol de base comprend en outre un polyol à base de polyuréthane.

6. Panneau de garniture selon la revendication 1, dans lequel le mélange de copolymère de base comprend en outre un polyol à base de polyuréthane.

7. Panneau de garniture selon la revendication 1, dans lequel le polyol à base d'huile agricole comprend au moins un polyol à base d'huile de soja et un polyol à base d'huile de mais.

8. Panneau de garniture selon la revendication 1, comprenant en outre une deuxième couche structurelle qui est couplée à un deuxième côté de la couche compressible, la deuxième couche structurelle comprenant des fibres de renforcement qui sont constituées d'une matière agricole.

9. Panneau de garniture selon la revendication 1, comprenant en outre un matériau de recouvrement qui est couplé à la première couche structurelle sur un côté opposé de la couche compressible.

10. Panneau de garniture selon la revendication 1, dans lequel le panneau de garniture est une garniture de toit pour l'intérieur d'un véhicule.

11. Panneau de garniture selon la revendication 1, dans lequel les fibres de renforcement sont constituées au moins soit de jute, de chanvre ou de lin.

12. Panneau de garniture selon la revendication 1, dans lequel les fibres de renforcement se présentent sous la forme d'un matelas de fibres.

13. Panneau de garniture selon la revendication 1, dans lequel à couche adhésive comprend un diluant à base d'huile végétale.

14. Procédé de fabrication d'un panneau de garniture pour un véhicule, le procédé comprenant les étapes suivantes:
prévoir une couche compressible (14), la couche compressible étant constituée d'un polyol à base d'huile agricole;
prévoir une couche structurelle (16), la couche structurelle comprenant des fibres de renforcement qui sont constituées d'une matière agricole; et
coupler la couche compressible à la couche structurelle avec une couche adhésive (20), la couche adhésive comprenant un diluant à base agricole,
**caractérisé par** l'étape consistant à:
fournir la couche compressible (14) comprenant un mélange de polyol de base et un mélange de copolymère de base, le mélange de polyol de base et le mélange de copolymère de base comprenant chacun le polyol à base d'huile agricole.
